# EUROPÄISCHE PATENTSCHRIFT

(11) **EP 3 557 734 B1**
(45) Veröffentlichungstag und Bekanntmachung des Hinweises auf die Patenterteilung: **06.01.2021**
(21) Anmeldenummer: 19164602.5
(22) Anmeldetag: 22.03.2019
(51) Int. Cl.: H02K 15/02, H02K 1/06, B21B 1/38, B21B 15/00, B65H 35/02, B23D 19/00, B23D 31/00

(54) **VERFAHREN UND VORRICHTUNG ZUR HERSTELLUNG VON MEHRLAGIGEN BLECHSTREIFENPAKETEN**
METHOD AND DEVICE FOR PRODUCING MULTILAYER METAL STRIP PACKAGES
PROCÉDÉ ET DISPOSITIF DE FABRICATION DE PAQUETS DE BANDES DE TÔLES MULTICOUCHE

(30) Priorität: 16.04.2018 DE 102018109008
(43) Veröffentlichungstag der Anmeldung: 23.10.2019
(73) Patentinhaber: Muhr und Bender KG, 57439 Attendorn (DE)
(72) Erfinder: SALJÉ, Hartmut, 99084 Erfurt (DE); DÖNGES, Benjamin, 44379 Dortmund (DE); SCHEBITZ, Michael, 57439 Attendorn (DE); RINSDORF, Andreas, 57258 Freudenberg (DE); JANSSEN, Peter, 40885 Ratingen (DE); MUHR, Thomas, 57439 Attendorn (DE)
(74) Vertreter: Neumann Müller Oberwalleney & Partner Patentanwälte

(56) Entgegenhaltungen:
- EP-A1- 2 139 011
- DE-A1- 10 032 506

## Beschreibung

Die Erfindung betrifft ein Verfahren und eine Vorrichtung zur Herstellung von mehrlagigen Blechstreifenpaketen, insbesondere für den Einsatz in automobilen Anwendungen. Hauptanwendung finden mehrlagige Blechstreifenpakete als Halbzeug der Kerne von Rotoren und Statoren in Elektromotoren und auch als Halbzeuge für Karosseriebauteile.

Elektromotoren weisen einen Rotor sowie einen Stator auf. Der Stator ist dreh- und ortsfest angeordnet und baut mittels Permanentmagneten oder Spulen ein erstes magnetisches Feld auf. Der Rotor ist drehbar gegenüber dem Stator gelagert und baut mittels Permanentmagneten oder Spulen ein zweites magnetisches Feld auf. Zur Erzeugung eines Antriebsmomentes werden die beiden Magnetfelder durch gesteuerte Umpolung der Magnetfelder zueinander in magnetische Wechselwirkung gebracht. Eines der Magnetfelder wird zur Realisierung der Umpolung zumeist durch eine wechselstromdurchflossene Spule erzeugt. Zur Leitung der Feldlinien beider Magnetfelder und Reduktion des magnetischen Widerstandes werden die Permanentmagnete in ferromagnetische Kerne eingesetzt bzw. die Spulen um ferromagnetische Kerne angeordnet. Die Kerne sind dabei zumeist als zylinderförmige Kerne ausgeführt. In der DIN EN 61021 sind beispielsweise eine Vielzahl von Typen und Typenreihen für Kerne genormt. Es werden darüber hinaus aber auch Sonderformen eingesetzt. Mit steigender Frequenz und Amplitude des Wechselstromes in den Magnetfeld bildenden Spulen werden in den Kernen Wirbelströme in Richtung der Zylinderachse induziert, die zu magnetischen Verlusten führen. Um diesen Effekt zu minimieren, können mehrlagige Blechpakete als Kerne verwendet werden. Je dünner dabei die einzelnen Lagen sind, desto geringer sind die Wirbelstromverluste. Die einzelnen Blechstreifen können dabei durch Einbringen einer Isolationsschicht elektrisch voneinander getrennt und anschließend zu einem Paket gefügt werden. Die Isolationsschicht kann dabei eine geeignete Folie sein oder beispielsweise durch einen Kleber, der auch zum gleichzeitigen Fügen verwendet wird, gebildet werden. Die Blechstreifen werden aus Bandmaterial ausgeschnitten, bevor sie im Falle eines Statorblechpaketes mit einer Spule bewickelt oder im Falle eines Rotorblechpaketes mit einer Welle gefügt werden. Je nach Maschinentyp werden die Blechpakete des Rotors mit Permanentmagneten, Kurzschlusskäfigen oder -spulen versehen.

Aus der JP2005297393 A ist ein Verfahren zur Herstellung von mehrlagigen Blechstreifenpaketen bekannt. Dabei wird jeweils auf zwei übereinander angeordnete Trommeln aufgewickeltes ferromagnetisches Bandmaterial abgerollt und durch eine Förderrolle übereinander gelegt. Zwischen den beiden Materialbändern wird vor der Förderrolle eine haftfähige Isolationsschicht eingebracht. Dies geschieht entweder durch Auftragen von Klebstoff in einem rollenförmigen Beschichter oder durch das Einführen einer klebstofftragenden Folie zwischen die beiden Metallbänder. Die Verbindung wird anschließend unter Druck und bei Wärmezufuhr ausgehärtet. Das so gebildete zweilagige Metallband kann wiederum auf eine Trommel aufgewickelt werden und der Prozess mehrfach wiederholt werden. Abschließend werden die mehrlagigen Bänder einer Presse zugeführt und Platinen in der gewünschten Form ausgestanzt.

Aus der DE 31 10 339 C2 ist ein weiteres Verfahren zur Herstellung von mehrlagigen Blechstreifenpaketen bekannt. Von einer Trommel wird dort aufgewickeltes dünnes Elektroblechband, das beidseitig mit vorgehärtetem duroplastischen Kleber beschichtet ist, abgewickelt und über eine Richt- und Vorschubeinrichtung einer Stanzpresse zugeführt. In der Stanzpresse werden aus dem Blechstreifen Lamellen ausgeschnitten und in einem Magazin zu einem Blechpaket übereinander gestapelt. Nachfolgend wird das Blechpaket über ein Förderband in eine Aushärtezone und anschließend in eine Abkühlzone transportiert und dort unter Druck verklebt.

Im Karosseriebau werden mehrlagige Blechstreifenpakete unteranderem als Köperschalldämpfende Verbundbleche verwendet, wie sie beispielsweise in der WO 2016/058740 A1 und der EP 1 569 793 B1 vorgeschlagen werden.

In der WO 2016/012182 A1 wird für die Herstellung von Verbundblechen ein Verfahren offenbart, bei dem von zwei separaten Rollen zwei äußere metallische Lagen und von einer dritten Rolle eine Kunststofflage abgewickelt werden. Die drei Lagen werden kontinuierlich in einer ersten Laminiereinrichtung durch einen ersten Laminierspalt zu einem Blechstreifenpaket zusammengeführt. Darauffolgend wird das Blechstreifenpaket zunächst in eine erste Heizzone und in eine zweite Laminiereinrichtung mit einem zweiten Laminierspalt geführt. Abschließen wird das laminierte Blechstreifenpaket durch eine Kühlzone transportiert.

Weitere Herstellungsverfahren sind in DE 100 32 506 A1 und EP 2 139 011 A1 offenbart.

Die zuvor beschriebenen Herstellungsverfahren von mehrlagigen Blechstreifenpaketen weisen entweder hohe Durchlaufzeiten oder eine hohe Anlagenkomplexität auf und sind somit unwirtschaftlich.

Der vorliegenden Erfindung liegt somit die Aufgabe zu Grunde, ein Verfahren zur Herstellung von mehrlagigen Blechstreifenpaketen, insbesondere für den Einsatz in automobilen Anwendungen bereitzustellen, dass zu geringen Produktionskosten führt. Darüber hinaus ist es Aufgabe der Erfindung für das vorgeschlagene Verfahren eine Vorrichtung bereitzustellen.

Zur Lösung der Aufgabe wird ein Verfahren zur Herstellung von mehrlagigen Blechstreifenpaketen mit folgenden Schritten vorgeschlagen: Zuführen von einem metallischen Bandmaterial, das eine Oberseite und eine Unterseite aufweist, mittels einer Zuführanordnung. Längsteilen des zugeführten Bandmaterials in einer Längsrichtung des zugeführten Bandmaterials in mehrere Blechstreifen in einem kontinuierlichen Verfahren mittels einer Bandteilanordnung, und kontinuierliches Übereinanderführen zumindest einer Teilzahl der Blechstreifen zu einem Blechstreifenpaket mittels einer Führungsanordnung.

Das vorgeschlagene Verfahren weist den Vorteil auf, dass die Blechstreifenpakete in einem kontinuierlichen Prozess hergestellt werden, Bandmaterial in Standardgrößen zugeführt werden kann und Umrüstzeiten reduziert werden können.

In einer möglichen Ausführung des Verfahrens beträgt die Breite des zugeführten Bandmaterials maximal 4500mm, insbesondere maximal 2500mm, insbesondere maximal 2000mm. Die Breite ist dabei durch den Abstand der in Transportrichtung ausgerichteten Seiten des Bandmaterials definiert. Die Dicke des zugeführten Bandmaterials ist vorzugsweise größer als 0,04 mm, insbesondere größer als 0,05mm, und/oder vorzugsweise kleiner als 3 mm, insbesondere kleiner als 2 mm. Die Dicke ist senkrecht zur Breite orientiert. Das Bandmaterial kann eine einheitliche oder eine variable Dicke in Längsrichtung aufweisen. Das Bandmaterial kann kontinuierlich, beispielsweise durch Abhaspeln von Coils, oder sequentiell als Bandmaterial vordefinierter Länge zugeführt werden. Das zugeführte Bandmaterial kann ein mehrlagiges Blechstreifenpaket sein, insbesondere ein Blechstreifenpaket, das durch ein erfindungsgemäßes Verfahren hergestellt wurde, um eine hohe Anzahl an Lagen zu realisieren.

Dienen die Blechstreifenpakete als Halbzeug für die Herstellung von Kernen für Elektromotoren, kann das Bandmaterial aus einem ferromagnetischen Metall hergestellt sein, insbesondere aus einem Elektroband.

Das Bandmaterial kann in einer möglichen Ausführungsform unbeschichtete zugeführt werden. Als unbeschichtet soll auch Bandmaterial verstanden werden, das eine Vorbeschichtung aufweist, beispielsweise zum Korrosionsschutz oder zur Passivierung, die nicht der Isolation oder dem Verbinden der Blechstreifen dient. In einer weiteren Ausführungsform kann dem Prozess Bandmaterial zugeführt werden, das eine Vorbeschichtung aufweist, die der Isolation oder dem Verbinden der Blechstreifen dient.

In einer möglichen Ausführung kann auf zumindest einem von der Oberseite und der Unterseite des zugeführten Bandmaterials oder der Blechstreifen eine Kunststoffbeschichtung mittels einer Beschichtungsanordnung aufgebracht werden. Das Aufbringen der Kunststoffbeschichtung kann flächig erfolgen. Alternativ kann das Aufbringen auch punktförmig erfolgen. Die Beschichtung kann sich vollständig über die Breite des Bandmaterials bzw. der Blechstreifen erstrecken. Alternativ können beim Aufbringen der Kunststoffbeschichtung Bereiche vom Beschichtungsmaterial freigehalten werden. Neben dem Walzbeschichten sind auch andere flächige Beschichtungsverfahren wie Sprühbeschichten und Pulverbeschichten denkbar. Ein punktförmiges Auftragen des Beschichtungsmaterials kann über entsprechende Spritzenköpfe realisiert werden. Das Aufbringen der Kunststoffbeschichtung kann über einen Teil der Breite des zugeführten Bandmaterials oder der Blechstreifen oder über die gesamte Breite des zugeführten Bandmaterials oder der Blechstreifen erfolgen.

Die Kunststoffbeschichtung kann einen Klebstoff, Backlack, oder Isolationslack umfassen. Durch die Kunststoffbeschichtung wird somit eine elektrische Trennung der Blechlagen erzielt und/oder die Blechlagen werden durch die Kunststoffbeschichtung stoffschlüssig miteinander verbunden. Alternativ kann die Kunststoffbeschichtung ein visko-elastischer Polymer sein. Durch die dämpfende Eigenschaft des visko-elastischen Polymers, wird diese Kunststoffbeschichtung insbesondere in schwingungsgedämpften Blechpaketen für Karosseriebauteile eingesetzt.

Das Aufbringen der Kunststoffbeschichtung auf das Bandmaterial kann vor dem Zuführen des Bandmaterials erfolgen. Alternativ kann das Aufbringen der Kunststoffbeschichtung auf das Bandmaterial nach dem Zuführen und vor dem Längsteilen in mehrere Blechstreifen erfolgen. Wird das Beschichtungsmaterial auf die Blechstreifen aufgebracht, kann das Aufbringen nach dem Längsteilen und vor dem Walzen erfolgen.

Das Längsteilen des zugeführten Bandmaterials in einer Längsrichtung des zugeführten Bandmaterials in mehrere Blechstreifen erfolgt über eine Bandteilanlage. Die Bandteilanlage kann dabei ein beliebiges trennendes Fertigungsverfahren abbilden, insbesondere Laserstrahl-, Plasma- oder Wasserstrahlschneiden, Trennschleifen, Stanzen oder Scherschneiden. Die so hergestellten Blechstreifen können zumindest in einer Teilzahl die gleiche Breite aufweisen. Die Blechstreifen bleiben in der Ebene senkrecht zur Transportrichtung des Bandmaterials, in der die Bandteilanlage angeordnet ist, weiterhin mit dem zugeführten Bandmaterial verbunden, sodass das Längsteilen kontinuierlich erfolgt.

Das kontinuierliche Übereinanderführen zumindest einer Teilzahl der Blechstreifen zu einem Blechstreifenpaket erfolgt mittels einer Führungsanordnung, die mehrere Umlenkwalzen und Führungswalzen, insbesondere zur seitlichen Führung der Blechstreifen, um ein Übereinanderführen der Blechstreifen quer zur Transportrichtung zu ermöglichen, umfassen kann. Es ist möglich, dass die Blechstreifen zu mehreren separaten Blechstreifenpaketen zusammengeführt werden. Insbesondere wenn Teilzahlen der Blechstreifen jeweils unterschiedliche Breiten aufweisen, können Blechstreifen mit gleicher Breite jeweils zu einem Blechstreifenpaket zusammengeführt werden.

Die Blechstreifenpakete können in einer möglichen Ausführungsform mittels einer Walzanordnung gewalzt werden. Die Walzkraft kann dabei so eingestellt sein, dass Lufteinschlüsse in der Kunststoffbeschichtung herausgedrückt werden oder die Kunststoffbeschichtung gleichmäßig verteilt wird. Es ist auch denkbar, dass die Walzkraft so eingestellt ist, dass die Blechlagen eine plastische Verformung erfahren. Das Walzen kann unter der Zufuhr von Wärme erfolgen, um ein Aushärten der Kunststoffbeschichtung, insbesondere bei warmaushärtenden Kunststoffen zu initiieren. Die Wärmezufuhr kann über einen Ofen, in dem die Walzrollen angeordnet sind, erfolgen. Alternativ können die Walzrollen direkt beheizt werden. Dem Walzen kann dann eine Abkühlstrecke folgen. Insbesondere bei kaltaushärtenden Kunststoffbeschichtungen kann auf eine Wärmezufuhr verzichtet werden.

In einer möglichen Ausführung können die Blechstreifenpakete mittels einer Aufrollanordnung zu Spulen aufgerollt werden. Die Spulen können als Halbzeug vertrieben werden oder in einen nachgelagerten Prozessschritt überführt werden. Alternativ können die Blechstreifenpakete mittels einer Konturieranordnung zu Blechpaketen konturiert werden, insbesondere durch Scherschneiden, beispielsweise Stanzen oder Feinschneiden. Das Feinschneiden ermöglicht beispielsweise die wirtschaftliche Produktion von Bauteilen mit hohen Anforderungen an die Maßhaltigkeit. Es ist aber auch jedes andere Trennverfahren denkbar, beispielsweise Normalstanzen oder Laserstrahlschneiden. Die Blechpakete können beispielsweise in Form von nicht segmentierten Stator- oder Rotorkernen, insbesondere als 360°-Ronden, sowie segmentierten Stator- oder Rotorkernen hergestellt werden. Sind die einzelnen Blechlagen der Blechpakete nicht stoffschlüssig miteinander verbunden, kann die Konturieranordnung ein Magazin zur Aufnahme der Blechpakete aufweisen, in dem die Blechpakete zu einer Einheit gefügt werden können.

In einer weiteren möglichen Ausführung kann das Längsteilen des zugeführten Bandmaterials in mehrere Blechstreifen durch zumindest eine Trenneinheit erfolgen, die in einer Trennebene (E1, E2) senkrecht zur Transportrichtung angeordnet ist, und das kontinuierliche Übereinanderführen zumindest einer Teilzahl der Blechstreifen (8, 8', 8") kann in einer Vereinigungsebene (E3) senkrecht zur Transportrichtung erfolgen. Eine prozentuale Abweichung zwischen einer Wegstrecke, die die einzelnen Blechstreifen (8, 8', 8") zwischen der Trennebene (E1, E2), die den größten Abstand zur Vereinigungsebene (E3) aufweist, und der Vereinigungsebene (E3) zurücklegen, kann kleiner als 25%, insbesondere kleiner als 15%, insbesondere kleiner als 10%, sein. Hierdurch kann der Materialverschnitt beim Zuführen von neuem Bandmaterial, beispielsweise von einer neuen Trommel, reduziert werden.

Die Aufgabe wird weiter gelöst durch eine Vorrichtung zur Herstellung von mehrlagigen Blechstreifenpaketen, die eine Zuführanordnung für die Zuführung eines metallischen Bandmaterials umfasst. Eine Bandteilanordnung teilt das Bandmaterial in einer Längsrichtung des zugeführten Bandmaterials in mehrere Blechstreifen, und eine Führungsanordnung, ist derart ausgestaltet, um zumindest eine Teilzahl der mehreren Blechstreifen zu einem Blechstreifenpaket kontinuierlich übereinander zuführen.

Die Merkmale des zuvor beschriebenen Verfahrens lassen sich analog auf die vorgeschlagene Vorrichtung übertragen. Daher weist die Vorrichtung die gleichen Vorteile wie das zuvor beschriebene Verfahren auf und ermöglicht zudem einen platzsparenden Aufbau.

Die Vorrichtung kann in einer möglichen Ausgestaltung eine Beschichtungsanordnung zum Aufbringen einer Kunststoffbeschichtung auf zumindest eine von der Oberseite und der Unterseite des Bandmaterials oder der Blechstreifen aufweisen. Eine Walzanordnung zum Walzen der Blechstreifenpakete kann in der Vorrichtung angeordnet sein. Die Walzanordnung kann insbesondere mit einer zusätzlichen Wärmezufuhr ausgestattet sein, wobei die Wärmezufuhr durch einen Ofen oder durch Beheizen der Walzrollen erfolgen kann.

Die Vorrichtung kann in einer möglichen Ausführung eine Konturieranordnung zum Heraustrennen von Blechpaketen aus den Blechstreifenpaketen oder eine Aufwickelanordnung zum Aufwickeln der Blechstreifenpakete zu einer Spule umfassen.

In den nachfolgenden Zeichnungsfiguren werden bevorzugte Ausführungsbeispiele erläutert. Darin zeigt
- Figur 1: schematisch eine erfindungsgemäße Vorrichtung zur Herstellung mehrlagiger Blechstreifenpakete in einer ersten Ausführung;
- Figur 2: schematisch eine Konturieranordnung für die Vorrichtung nach Figur 1;
- Figur 3: schematisch eine Aufrollanordnung für die Vorrichtung nach Figur 1;
- Figur 4: schematisch eine erfindungsgemäße Vorrichtung zur Herstellung mehrlagiger Blechstreifenpakete in einer zweiten Ausführungsform;
- Figur 5: eine Prozessabfolge eines erfindungsgemäßen Verfahrens zur Herstellung von mehrlagigen Blechstreifenpaketen in einer ersten Ausgestaltung;
- Figur 6: eine Prozessabfolge eines erfindungsgemäßen Verfahrens zur Herstellung von mehrlagigen Blechstreifenpaketen in einer zweiten Ausgestaltung;
- Figur 7: eine Prozessabfolge eines erfindungsgemäßen Verfahrens zur Herstellung von mehrlagigen Blechstreifenpaketen in einer dritten Ausgestaltung;
- Figur 8: eine Prozessabfolge eines erfindungsgemäßen Verfahrens zur Herstellung von mehrlagigen Blechstreifenpaketen in einer vierten Ausgestaltung;
- Figur 9: eine Prozessabfolge eines erfindungsgemäßen Verfahrens zur Herstellung von mehrlagigen Blechstreifenpaketen in einer fünften Ausgestaltung;
- Figur 10: eine Prozessabfolge eines erfindungsgemäßen Verfahrens zur Herstellung von mehrlagigen Blechstreifenpaketen in einer sechsten Ausgestaltung;
- Figur 11: eine Prozessabfolge eines erfindungsgemäßen Verfahrens zur Herstellung von mehrlagigen Blechstreifenpaketen in einer siebten Ausgestaltung;
- Figur 12: eine Prozessabfolge eines erfindungsgemäßen Verfahrens zur Herstellung von mehrlagigen Blechstreifenpaketen in einer achten Ausgestaltung;
- Figur 13: eine Prozessabfolge eines erfindungsgemäßen Verfahrens zur Herstellung von mehrlagigen Blechstreifenpaketen in einer neunten Ausgestaltung;
- Figur 14: eine Prozessabfolge eines erfindungsgemäßen Verfahrens zur Herstellung von mehrlagigen Blechstreifenpaketen in einer zehnten Ausgestaltung.

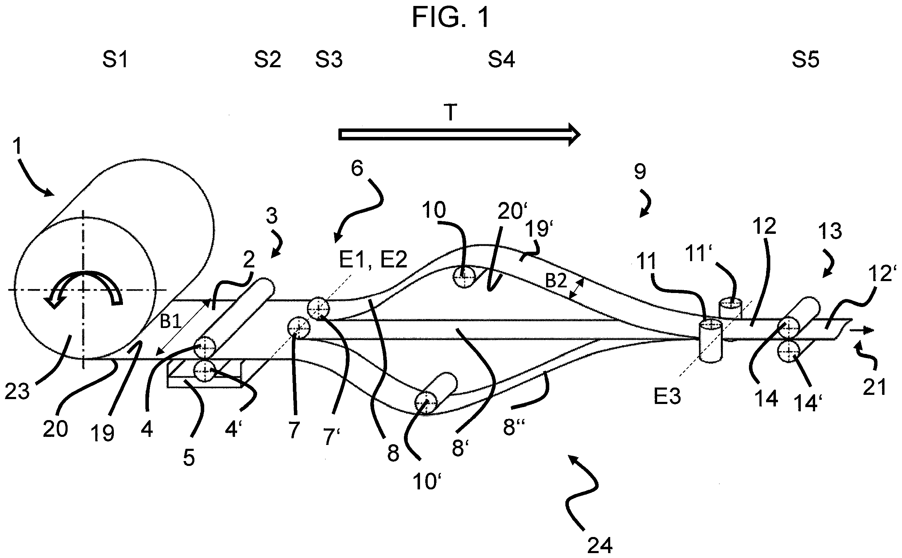

Figur 1 zeigt ein erfindungsgemäßes Verfahren bzw. eine erfindungsgemäße Vorrichtung 24 zur Herstellung von mehrlagigen Blechstreifenpaketen (12') in einer ersten Ausführungsform.

In einem ersten Prozessschritt S1 wird aufgespultes, unbeschichtetes Bandmaterial 2 von einer Trommel 23 mittels einer Zuführanordnung 1 abgewickelt und zugeführt. Das Bandmaterial 2 umfasst eine Oberseite 19 und eine Unterseite 20 und weist eine Breite B1 sowie eine Dicke D1 auf, die in den Zeichnungen nur schematisch dargestellt ist, wobei die Breite B1 sich von einer ersten langen Seite und einer zweiten langen Seite des Bandmaterials 2 erstreckt und quer zu einer Transportrichtung T des Bandmaterials 2 ausgerichtet ist. Die Breite B1 beträgt 2500mm, ohne darauf begrenzt zu sein. Die Dicke D1 des Bandmaterials 2 ist in Transportrichtung T konstant. Die Dicke D1 kann alternativ aber auch variabel gestaltet sein. Das Bandmaterial 2 ist aus einem ferromagnetischen Metall hergestellt, ohne darauf beschränkt zu sein.

An den Prozessschritt S1 schließt der Prozessschritt S2 an, bei dem das Bandmaterial 2 in einer Beschichtungsanordnung 3 mit einer Kunststoffbeschichtung beschichtet wird. Dazu wird als Beschichtungsmaterial ein Isolierlack verwendet. Es ist aber auch denkbar einen Klebstoff, Backlack, oder visko-elastischen Polymer als Beschichtungsmaterial zu verwenden. In einem Walzbeschichtungsverfahren wird das Bandmaterial 2 dazu durch zwei vertikal angeordnete Beschichtungswalzen 4, 4' geführt. Die untere Beschichtungswalze 4' wird, wie dargestellt, durch ein Materialreservoir 5 versorgt. Die obere Beschichtungswalze 4 wird ebenfalls durch ein in den Figuren nicht dargestelltes Materialreservoir 5' mit dem Beschichtungsmaterial versorgt. Durch das Abwälzen der Beschichtungswalzen 4, 4' auf dem Bandmaterial 2 wird das Bandmaterial 2 über die gesamte Breite B1 mit dem Beschichtungsmaterial flächig benetzt. Es ist auch denkbar, dass mehrere nebeneinander angeordnete Beschichtungswalzen 4 die Oberseite 19 und/oder die Unterseite 20 des Bandmaterials 2 benetzen und Bereiche frei von Beschichtungsmaterial gehalten werden. Neben dem Walzbeschichten ist auch jedes andere flächige Beschichten wie Sprühbeschichten, Pulverbeschichten oder aber auch punktförmiges Auftragen des Beschichtungsmaterials denkbar.

An den Prozessschritt S2 schließt der Prozessschritt S3 an, in dem das Bandmaterial 2 in einer Bandteilanordnung 6 in drei Blechstreifen 8, 8', 8" geteilt wird, ohne dass die Anzahl darauf begrenzt ist. Dazu schneiden zwei rotierende Trennscheiben 7, 7' das Bandmaterial 2 in der Längsrichtung bzw. in der Transportrichtung T des Bandmaterials 2. Das Schneiden kann alternativ auch durch einen Laser oder einen Wasserstrahl erfolgen. Die so erzeugten Blechstreifen 8, 8', 8" weisen vorliegend untereinander eine gleiche Breite B2 auf. Es ist auch denkbar, dass jeweils eine Teilzahl der Blechstreifen 8 eine unterschiedliche Breite B2 aufweist. Die Blechstreifen 8, 8', 8" sind in einer gedachten Ebene E1, E2 quer zur Transportrichtung T, in der die Trennscheiben 7, 7' angeordnet sind, weiterhin mit dem zugeführten Bandmaterial 2 verbunden, sodass das Längsteilen in einem kontinuierlichen Verfahren stattfindet.

An den Prozessschritt S3 schließt der Prozessschritt S4 an, in dem die zuvor erzeugten Blechstreifen 8, 8', 8" mittels einer Führungsanordnung 9 kontinuierlich übereinander geführt werden. Hierzu werden die beiden äußeren Blechstreifen 8, 8" über Umlenkwalzen 10, 10' gelenkt und so der mittlere Blechstreifen 8' zwischen diesen positioniert. Die Blechstreifen 8, 8', 8" werden gemeinsam durch die Führungswalzen 11, 11' geführt, die in einer gedachten Ebene E3 quer zur Transportrichtung T angeordnet sind. Es ergibt sich ein dreilagiges Blechstreifenpaket 12, wobei die drei Blechstreifen 8, 8', 8" durch die zuvor aufgetragene Beschichtung aus Isolierlack elektrisch voneinander getrennt sind. Die Wegstrecke, die die Blechstreifen 8' und 8" über die Umlenkwalzen 10 bzw. 10' zwischen den Trennebenen E1 bzw. E2 und der Vereinigungsebene E3 zurücklegen, ist in der dargestellten Ausführung größer als die Wegstrecke, die der in Transportrichtung T gerade geführte Blechstreifen 8 zwischen den Trennebenen E1 bzw. E2 und der Vereinigungsebene E3 zurücklegt. Es ist ebenfalls denkbar, dass der Blechstreifen 8 ebenfalls über Umlenkwalzen geführt wird, sodass die Wegstrecke des Blechstreifens 8 zwischen den Trennebenen E1 bzw. E2 und der Vereinigungsebene E3 mit der Wegstrecke der Blechstreifen 8' und 8" weitgehend identisch ist. Die Blechstreifen 8 können untereinander alternativ auch zumindest zwei unterschiedliche Breiten B2 aufweisen, sodass es auch denkbar ist, dass jeweils die Blechstreifen 8, die eine gleiche Breite B2 aufweisen, übereinander geführt werden und somit mehrere Blechstreifenpakete 12 gebildet werden, die von mehreren Paaren von Führungswalzen 11, 11' aufgenommen werden.

An den Prozessschritt S4 schließt der Prozessschritt S5 an, bei dem das Blechstreifenpaket 12 mittels einer Walzanordnung 13 gewalzt wird. Dazu wird das Blechstreifenpaket 12 durch zwei vertikal zueinander angeordnete Walzrollen 14, 14' geführt, die das Blechstreifenpaket 12 mit einer definierten Kraft beaufschlagen. Die Kraft ist in der dargestellten Ausführungsform so gewählt, dass das Beschichtungsmaterial gleichmäßig zwischen den Blechstreifen 8, 8', 8" verteilt wird bzw. Lufteinschlüsse herausgedrückt werden. Es ist aber auch denkbar, dass die Kraft so groß gewählt wird, dass die Blechstreifen 8, 8', 8" eine plastische Verformung erfahren. Die Walzrollen 14, 14' können zudem geheizt sein. Durch die so in das Blechstreifenpaket 12 eingetragene Wärme härtet der Isolierlack auf einer nachfolgenden Abkühlstrecke 21 aus und verbindet die einzelnen Lagen der Blechstreifenpakete 12' stoffschlüssig. Für kaltaushärtende Beschichtungsmaterialien kann auf die Wärmezufuhr verzichtet werden.

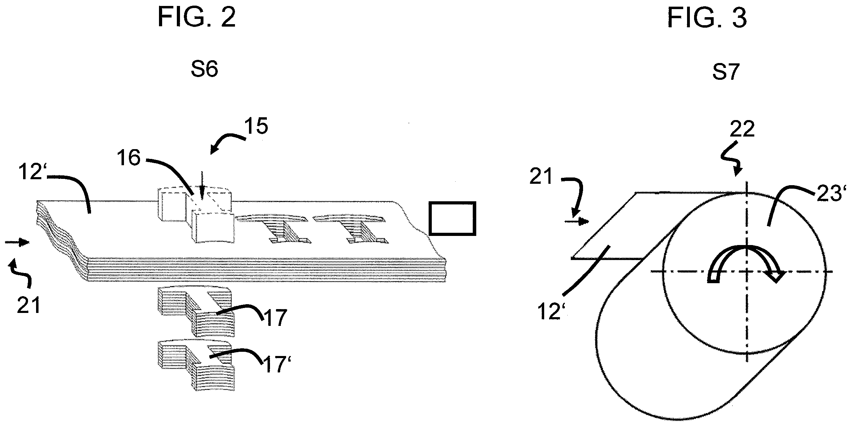

In Figur 2 wird ein dem Prozessschritt S5 nachgelagerter Prozessschritt S6 und eine diesen Prozessschritt S6 abbildende Anordnung dargestellt. Aus den Blechstreifenpaketen 12' können mittels einer Konturieranordnung 15 Blechpakete 17, 17' in Form von segmentierten Statorzahnkernen für Elektromotoren herausgetrennt werden, ohne auf diese Form beschränkt zu sein. So ist es alternativ auch denkbar, dass durch die Konturieranordnung 15 Blechpakete in Form von nicht segmentierten Stator- oder Rotorkernen, insbesondere als 360°-Ronden, sowie segmentierten Rotorkernen hergestellt werden. Die einzelnen Blechlagen der Blechpakete 12' sind dabei durch den Isolierlack stoffschlüssig verbunden. Von der Konturieranordnung 15 ist zur Erhöhung der Übersichtlichkeit nur das Schneidwerkzeug 16 dargestellt. Die Konturieranordnung 15 kann darüber hinaus im Falle des Feinschneidens eine Führungsplatte mit Ringzacken, eine Schneidplatte und einen Auswerfer umfassen. Es ist auch denkbar, dass in der Konturieranordnung 15 ein Laser- oder Wasserstrahlschneiden anstatt eines Feinschneidens erfolgt. Für Bauteile mit geringeren Maßhaltigkeitsanforderungen ist eine Normalstanze als Konturieranordnung 15 denkbar.

In Figur 3 wird alternativ ein dem Prozessschritt S5 nachgelagerter Prozessschritt S7 und eine diesen Prozessschritt S7 abbildende Anordnung dargestellt. Das gewalzte Blechstreifenpaket 12' wird mittels einer Aufrollanordnung 22 auf eine Trommel 23' zu einer Spule, auch Coil genannt, aufgerollt. Die Spule kann als Halbzeug vertrieben werden oder einem weiteren Bearbeitungsprozess beispielsweise in einer separaten Stanzanlage zugeführt werden. Insbesondere ist denkbar, dass die Trommel 23' mit den Blechstreifenpaketen 12' als Bandmaterial für den zuvor beschriebenen Prozessschritt S1 dient und die Prozessabfolge aus Figur 1 durchläuft.

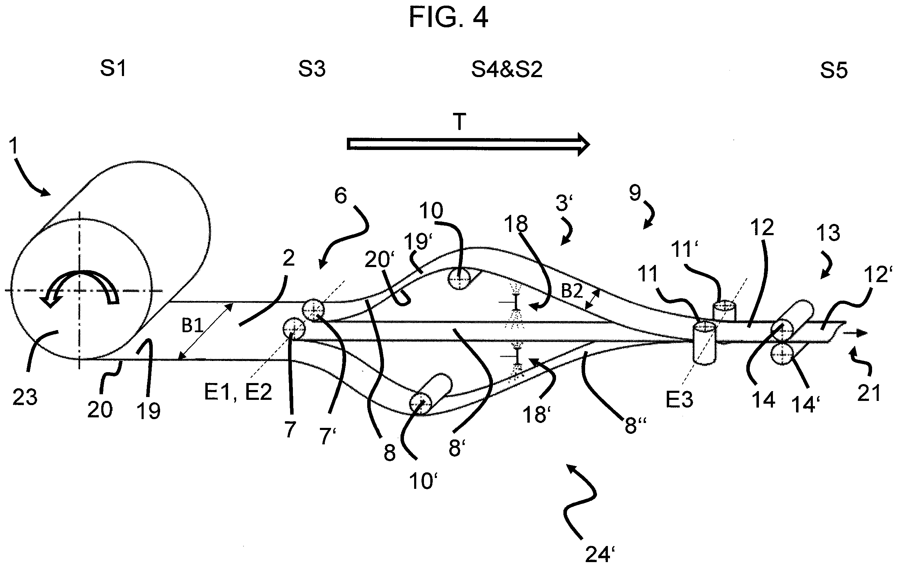

In Figur 4 wird ein erfindungsgemäßes Verfahren bzw. eine erfindungsgemäße Vorrichtung 24' zur Herstellung von mehrlagigen Blechstreifenpaketen (12') in einer zweiten Ausführungsform gezeigt. Das Verfahren bzw. die Vorrichtung 24' unterscheiden sich von dem Verfahren bzw. der Vorrichtung, die in Figur 1 gezeigt wird, nur durch die Anordnung des Prozessschrittes der Beschichtung bzw. die Positionierung der Beschichtungsanordnung 3'. Das Beschichten mittels einer Beschichtungsanordnung 3' der Oberseite 19' und Unterseite 20' erfolgt dabei innerhalb der Führungsanordnung 9. Dazu sind zwei Lackiereinheiten 18, 18' zwischen den Blechstreifen 8, 8', 8" angeordnet, die die Blechstreifen 8, 8', 8" im Sprühlackierverfahren flächig beschichten. Auch bei dieser Prozessabfolge ist jedes andere flächige Beschichten wie Walzbeschichten, Pulverbeschichten oder das punktuelle Aufbringen des Beschichtungsmaterials denkbar. Wie für die erste Ausführungsform des erfindungsgemäßen Verfahrens bzw. der erfindungsgemäßen Vorrichtung 24 beschrieben, kann an den Prozessschritt S5 der in Figur 2 beschriebene Prozessschritt S6 bzw. der in Figur 3 beschriebene Prozessschritt S7 anschließen.

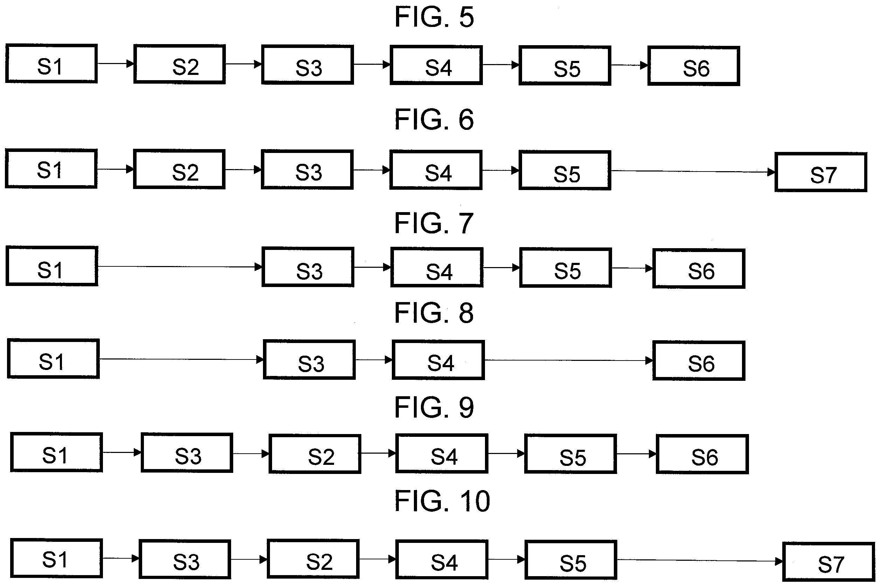

Die Figuren 5 bis 14 beschreiben jeweils mögliche Ausführungsformen des erfindungsgemäßen Verfahrens an Hand eines Flussdiagramms. Figur 5 bildet an Hand des dargestellten Flussdiagramms den Prozess ab, der sich durch die Zusammenschau der zuvor beschriebenen Figuren 1 und 2 ergibt. Figur 6 zeigt das Flussdiagramm des Prozesses, der sich durch die Zusammenschau der Figuren 1 und 3 ergibt. Es sei daher an dieser Stelle auf die vorherigen Erläuterungen verwiesen.

In Figur 7 wird eine mögliche Ausführungsform des Verfahrens gezeigt, deren Prozessabfolge sich von der Prozessabfolge aus Figur 6 dadurch unterscheidet, dass der Prozessschritt S2 entfällt. Insofern wird für die gemeinsamen Prozessschritte auf die Darstellung zu Figur 5 verwiesen. Durch Entfall der Beschichtung in Prozessschritt S2 sind die einzelnen Lagen der Blechstreifenpakete 12, 12' nicht voneinander getrennt und liegen direkt aufeinander auf. Im Walzprozess S5 kann auf die Wärmezufuhr verzichtet werden oder der Walzprozess kann entsprechend der in Figur 8 dargestellten vierten möglichen Prozessabfolge entfallen. Im nachfolgenden Prozessschritt S6 werden Blechpakete 17, 17' in Form von segmentierten Statorzahnkernen in der Konturieranordnung 15 aus den Blechstreifenpaketen 12' herausgeschnitten, ohne auf diese Form beschränkt zu sein. Da die einzelnen Lagen der Blechpakete 17, 17' nicht verbunden sind, umfasst die Konturieranordnung 15 ein nicht dargestelltes Magazin zur Aufnahme der losen Blechpakete 17, 17', in dem ein Fügeprozess, beispielsweise durch Schweißen oder Nieten, erfolgen kann.

In Figur 9 wird eine weitere mögliche Prozessabfolge eines erfindungsgemäßen Verfahrens zur Herstellung von mehrlagigen Blechstreifenpaketen 12 an Hand eines Flussdiagramms dargestellt. Die Prozessabfolge aus Figur 9 unterscheidet sich von der Prozessabfolge aus Figur 5 dadurch, dass die Reihenfolge der Prozessschritte S2 und S3 vertauscht ist. Insofern wird für die Gemeinsamkeiten auf die Erläuterungen zu Figur 5 verwiesen. Durch das Vertauschen der Prozessschritte S2 und S3 wird das unbeschichtete Bandmaterial 2 zuerst in mehrere Blechstreifen 8, 8', 8" geteilt. Nachfolgend wird auf die Blechstreifen 8, 8', 8" auf einer Oberseite 19' und einer Unterseite 20' eine flächige Kunststoffbeschichtung in einer Beschichtungsanordnung 3 aufgebracht. Analog zur Beschreibung der Beschichtung des Bandmaterials 2 aus Figur 5, können auch Teilbereiche der Oberseite 19' und der Unterseite 20' frei von Beschichtungsmaterial gehalten werden. Neben dem Walzbeschichten ist auch jedes andere flächige Beschichten wie Sprühbeschichten, Pulverbeschichten oder aber punktförmiges Auftragen denkbar.

In Figur 10 wird eine mögliche Prozessabfolge eines erfindungsgemäßen Verfahrens zur Herstellung von mehrlagigen Blechstreifenpaketen 12 an Hand eines Flussdiagramms dargestellt, die sich von der Prozessabfolge aus Figur 9 dadurch unterscheidet, dass der Prozessschritt S7 entfällt und der Prozessschritt S6 direkt auf den Prozessschritt S5 folgt.

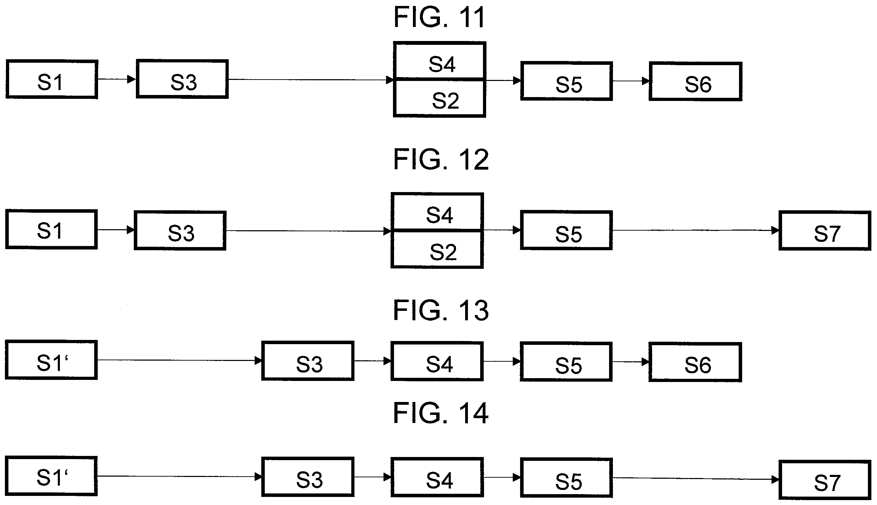

In Figur 11 wird eine mögliche Prozessabfolge eines erfindungsgemäßen Verfahrens zur Herstellung von mehrlagigen Blechstreifenpaketen 12 an Hand eines Flussdiagramms dargestellt, die sich durch die Zusammenschau der Figuren 4 und 2 ergibt. Es sei daher an dieser Stelle auf die vorherigen Erläuterungen verwiesen.

In Figur 12 wird eine mögliche Prozessabfolge eines erfindungsgemäßen Verfahrens zur Herstellung von mehrlagigen Blechstreifenpaketen 12 an Hand eines Flussdiagramms dargestellt, die sich durch die Zusammenschau der Figuren 4 und 3 ergibt. Es sei daher an dieser Stelle auf die vorherigen Erläuterungen verwiesen.

In Figur 13 wird eine weitere mögliche Prozessabfolge eines erfindungsgemäßen Verfahrens zur Herstellung von mehrlagigen Blechstreifenpaketen 12 an Hand eines Flussdiagramms dargestellt. Die Prozessabfolge aus Figur 13 unterscheidet sich zu der Prozessabfolge aus Figur 5 dadurch, dass im Schritt S1' Bandmaterial 2, das zuvor beschichtet wurde, von einer Trommel 23 abgewickelt und dem Prozess zugeführt wird und der Prozessschritt S2 entfällt. Die zuvor aufgebrachte Beschichtung ist aus einem Isolationslack hergestellt. Es ist aber auch möglich, dass ein Klebstoff, Backlack, Isolationslack oder visko-elastischen Polymer verwendet wird. Die Prozessschritte ab S3 gleichen sich mit den Prozessschritten aus Figur 5, sodass für die Gemeinsamkeiten abkürzend auf die Ausführungen zu Figur 5 verwiesen wird.

In Figur 14 wird eine weitere mögliche Prozessabfolge eines erfindungsgemäßen Verfahrens zur Herstellung von mehrlagigen Blechstreifenpaketen 12 an Hand eines Flussdiagramms dargestellt. Die Prozessabfolge aus Figur 14 unterscheidet sich zu der Prozessabfolge aus Figur 13 dadurch, dass der Prozessschritt S6 durch den Prozessschritt S7 ausgetauscht wird.

### Bezugszeichenliste

- 1: Zuführanordnung
- 2: Bandmaterial
- 3,3': Beschichtungsanordnung
- 4,4': Beschichtungswalzen
- 5,5': Materialreservoir
- 6: Bandteilanordnung
- 7,7': Trennscheiben
- 8, 8', 8": Blechstreifen
- 9: Führungsanordnung
- 10, 10': Umlenkwalzen
- 11, 11': Führungswalzen
- 12, 12': Blechstreifenpakete
- 13: Walzanordnung
- 14, 14': Walzrollen
- 15: Konturieranordnung
- 16: Schneidwerkzeug
- 17, 17': Blechpakete
- 18, 18': Lackiereinheit
- 19, 19': Oberseite
- 20, 20': Unterseite
- 21: Abkühlstrecke
- 22: Aufrollanordnung
- 23, 23': Trommel
- 24, 24': Vorrichtung

- B1: Breite Bandmaterial
- B2: Breite Blechstreifen
- D1: Dicke Bandmaterial
- E1: Trennebene
- E2: Trennebene
- E3: Vereinigungsebene
- T: Transportrichtung

## Patentansprüche

1. Verfahren zur Herstellung von mehrlagigen Blechstreifenpaketen mit folgenden Schritten:
- Zuführen von einem metallischen Bandmaterial (2), das eine Oberseite (19) und eine Unterseite (20) aufweist, mittels einer Zuführanordnung (1),
- Längsteilen des zugeführten Bandmaterials (2) in einer Längsrichtung des zugeführten Bandmaterials (2) in mehrere Blechstreifen (8, 8', 8") in einem kontinuierlichen Verfahren mittels einer Bandteilanordnung (6), und
- kontinuierliches Übereinanderführen zumindest einer Teilzahl der Blechstreifen (8, 8', 8") zu einem Blechstreifenpaket (12, 12') mittels einer Führungsanordnung (9).

2. Verfahren nach Anspruch 1,
**dadurch gekennzeichnet,**
**dass** die Blechstreifenpakete (12, 12') mittels einer Aufrollanordnung (22) zu Spulen (23') aufgerollt werden.

3. Verfahren nach Anspruch 1,
**dadurch gekennzeichnet,**
**dass** die Blechstreifenpakete (12, 12') mittels einer Konturieranordnung (15) zu Blechpaketen (17, 17') konturiert werden, insbesondere durch Scherschneiden.

4. Verfahren nach einem der Ansprüche 1 bis 3,
**dadurch gekennzeichnet,**
**dass** die Blechstreifenpakete (12, 12') mittels einer Walzanordnung (13) gewalzt werden, insbesondere unter der Zufuhr von Wärme.

5. Verfahren nach einem der Ansprüche 1 bis 4,
**dadurch gekennzeichnet,**
**dass** auf zumindest einem von der Oberseite (19, 19') und der Unterseite (20, 20') des zugeführten Bandmaterials oder der Blechstreifen (8, 8', 8") eine Kunststoffbeschichtung mittels einer Beschichtungsanordnung (3, 3') aufgebracht wird.

6. Verfahren nach Anspruch 5,
**dadurch gekennzeichnet,**
**dass** das Aufbringen der Kunststoffbeschichtung auf das Bandmaterial (2) vor oder nach dem Zuführen und vor dem Längsteilen in mehrere Blechstreifen (8, 8', 8") erfolgt.

7. Verfahren nach Anspruch 5,
**dadurch gekennzeichnet,**
**dass** das Aufbringen der Kunststoffbeschichtung auf die Blechstreifen (8, 8', 8") nach dem Längsteilen und vor dem Walzen erfolgt.

8. Verfahren nach einem der Ansprüche 5 bis 7,
**dadurch gekennzeichnet,**
**dass** die Kunststoffbeschichtung einen Klebstoff, Backlack, Isolationslack oder visko-elastischen Polymer umfasst.

9. Verfahren nach einem der Ansprüche 1 bis 8,
**dadurch gekennzeichnet,**
**dass** das zugeführte Bandmaterial (2) eine Dicke (D1) und eine Breite (B1) aufweist,
wobei die Breite (B1) des zugeführten Bandmaterials (2) maximal 4500mm, insbesondere maximal 2500mm, insbesondere maximal 2000mm, beträgt, und
wobei die Dicke (D1) des zugeführten Bandmaterials (2) größer als 0,04 mm, insbesondere größer als 0,05mm, und/oder kleiner als 3 mm, insbesondere kleiner als 2 mm, ist.

10. Verfahren nach einem der Ansprüche 1 bis 9,
**dadurch gekennzeichnet,**
**dass** das zugeführte Bandmaterial (2) ein mehrlagiges Blechstreifenpaket (12, 12') ist.

11. Verfahren nach einem der Ansprüche 1 bis 9,
**dadurch gekennzeichnet,**
**dass** das Längsteilen des zugeführten Bandmaterials (2) in mehrere Blechstreifen (8, 8', 8") durch zumindest eine Trenneinheit (7, 7') erfolgt, die in einer Trennebene (E1, E2) senkrecht zur Transportrichtung angeordnet ist, und
**dass** das kontinuierliche Übereinanderführen zumindest einer Teilzahl der Blechstreifen (8, 8', 8") in einer Vereinigungsebene (E3) weitgehend senkrecht zur Transportrichtung erfolgt,
wobei zumindest eine prozentuale Abweichung zwischen einer Wegstrecke, die die einzelnen Blechstreifen (8, 8', 8") zwischen der Trennebene (E1, E2), die den größten Abstand zur Vereinigungsebene (E3) aufweist, und der Vereinigungsebene (E3) zurücklegen, kleiner als 25%, insbesondere kleiner als 15%, insbesondere kleiner als 10%, ist

12. Vorrichtung zur Herstellung von mehrlagigen Blechstreifenpaketen umfassend:
eine Zuführanordnung (1) für die Zuführung eines metallischen Bandmaterials (2),
eine Bandteilanordnung (6) zum Längsteilen des Bandmaterials (2) in einer Längsrichtung des zugeführten Bandmaterials (2) in mehrere Blechstreifen (8, 8', 8"), und
eine Führungsanordnung (9), die ausgestaltet ist, um zumindest eine Teilzahl der mehreren Blechstreifen (8, 8', 8") zu einem Blechstreifenpaket (12, 12') kontinuierlich übereinander zuführen.

13. Vorrichtung nach Anspruch 12,
**gekennzeichnet durch**
eine Beschichtungsanordnung (3, 3') zum Aufbringen einer Kunststoffbeschichtung auf zumindest eine von der Oberseite (19, 19') und der Unterseite (20, 20') des Bandmaterials (2) oder der Blechstreifen (8, 8', 8").

14. Vorrichtung nach einem der Ansprüche 12 oder 13,
**gekennzeichnet durch**
eine Walzanordnung (13) zum Walzen der Blechstreifenpakete (12), insbesondere eine Walzanordnung (13) mit einer zusätzlichen Wärmezufuhr.

15. Vorrichtung nach einem der Ansprüche 12 bis 14,
**gekennzeichnet durch**
eine Konturieranordnung (15) zum Heraustrennen von Blechpaketen (17, 17') aus den Blechstreifenpaketen (12, 12')
oder eine Aufwickelanordnung (22) zum Aufwickeln der Blechstreifenpakete (12, 12') zu einer Spule (23').

## Claims

1. Process for producing multilayer metal strip packs, with the following steps:
- feeding a metallic strip material (2) having an upper side (19) and a lower side (20) by a feeding arrangement (1),
- longitudinally dividing of the fed strip material (2) in a longitudinal direction of the fed strip material (2) into a plurality of metal strips (8, 8', 8") in a continuous process by a strip dividing arrangement (6), and
- continuously superimposing of at least some of the metal strips (8, 8', 8") to form a metal strip pack (12, 12') by a guiding arrangement (9).

2. Process according to claim 1,
**characterised in**
**that** the metal strip pack (12, 12') is coiled-up by a coiling arrangement (22) to form coils (23').

3. Process according to claim 1,
**characterised in**
**that** the metal strip packs (12, 12') are contoured by a contouring arrangement (15) to form contoured metal packs (17, 17'), in particular by shear-cutting.

4. Process according to any of claims 1 to 3,
**characterised in**
**that** the metal strip packs (12, 12') are rolled by a rolling arrangement (13), in particular under heat supply.

5. Process according to any of claims 1 to 4,
**characterised in**
**that** a plastic coating is applied by a coating arrangement (3, 3') to at least one of the upper side (19, 19') and the lower side (20, 20') of the fed strip material or the metal strips (8, 8', 8").

6. Process according to claim 5,
**characterised in**
**that** the plastic coating is applied to the strip material (2) before or after feeding and before longitudinally dividing into a plurality of metal strips (8, 8', 8").

7. Process according to claim 5,
**characterised in**
**that** the plastic coating is applied to the metal strips (8, 8', 8") after longitudinally dividing and before rolling.

8. Process according to any of claims 5 to 7,
**characterised in**
**that** the plastic coating comprises an adhesive, bonding varnish, insulating varnish or viscoelastic polymer.

9. Process according to any of claims 1 to 8,
**characterised in**
**that** the fed strip material (2) has a thickness (D1) and a width (B1),
wherein the width (B1) of the fed strip material (2) is at most 4500 mm, in particular at most 2500 mm, in particular at most 2000 mm, and
wherein the thickness (D1) of the fed strip material (2) is greater than 0.04 mm, in particular greater than 0.05 mm, and/or smaller than 3 mm, in particular smaller than 2 mm.

10. Process according to any of claims 1 to 9,
**characterised in**
**that** the fed strip material (2) is a multi-layer metal strip pack (12, 12').

11. Process according to any of claims 1 to 9,
**characterised in**
**that** the longitudinally dividing of the fed strip material (2) into a plurality of metal strips (8, 8', 8") is effected by at least one dividing unit (7, 7') which is arranged in a dividing plane (E1, E2) perpendicular to the transport direction, and
**that** the continuously superimposing of the at least some of the metal strips (8, 8', 8") is carried out in a joining plane (E3) substantially perpendicular to the transport direction,
wherein at least a percentage deviation between a first path length that the respective metal strips (8, 8', 8") travel between the dividing plane (E1, E2) having the greatest distance to the joining plane (E3), and the joining plane (E3) is less than 25%, in particular less than 15%, in particular less than 10%.

12. Apparatus for producing multilayer metal strip packs, comprising:
a feeding arrangement (1) for feeding a metallic strip material (2),
a strip dividing arrangement (6) for longitudinally dividing the strip material (2) into a plurality of metal strips (8, 8', 8") in a longitudinal direction of the fed strip material (2), and
a guiding arrangement (9) configured to continuously superimpose at least some of the plurality of metal strips (8, 8', 8") onto each other to form a metal strip pack (12, 12').

13. Apparatus according to claim 12,
**characterised by**
a coating arrangement (3, 3') for applying a plastic coating to at least one of the upper side (19, 19') and the lower side (20, 20') of the strip material (2) or the metal strips (8, 8', 8").

14. Apparatus according to any of claims 12 or 13,
**characterised by**
a rolling arrangement (13) for rolling the metal strip pack (12), in particular a rolling arrangement (13) with an additional heat supply.

15. Apparatus according to any of claims 12 to 14,
**characterised by**
a contouring arrangement (15) for separating contoured metal packs (17, 17') from the metal strip pack (12, 12'),
or a coiling arrangement (22) for coiling-up the metal strip packs (12, 12') to a coil (23').

## Revendications

1. Procédé de fabrication de paquets de bandes métalliques multicouches, comportant les étapes suivantes consistant à :
- acheminer une bande de matière (2) métallique, laquelle comporte une face supérieure (19) et une face inférieure (20) au moyen d'un ensemble d'acheminement (1),
- découper longitudinalement la bande de matière (2) acheminée dans une direction longitudinale de la bande de matière (2) acheminée en plusieurs bandes de tôle (8, 8', 8") dans un procédé continu, au moyen d'un ensemble de découpe de bandes (6), et
- superposer en continu au moins un nombre partiel des bandes de tôle (8, 8', 8") en un paquet de bandes de tôle (12, 12') au moyen d'un ensemble de guidage (9).

2. Procédé selon la revendication 1,
**caractérisé en ce que**
les paquets de bandes de tôle (12, 12') sont enroulés en bobines (23') au moyen d'un ensemble d'enroulement (22) .

3. Procédé selon la revendication 1,
**caractérisé en ce que**
les paquets de bandes de tôle (12, 12') sont contourés au moyen d'un ensemble de contourage (15), notamment par cisaillage en des paquets de tôle (17, 17').

4. Procédé selon l'une quelconque des revendications 1 à 3,
**caractérisé en ce que**
les paquets de bandes de tôle (12, 12') sont laminés au moyen d'un ensemble de laminage (13), notamment sous apport de chaleur.

5. Procédé selon l'une quelconque des revendications 1 à 4,
**caractérisé en ce que**
sur au moins l'une parmi la face supérieure (19, 19') et la face inférieure (20, 20') de la bande de matière acheminée ou de la bande de tôle (8, 8', 8"), un revêtement de matière plastique est appliqué au moyen d'un ensemble d'enduction (3, 3').

6. Procédé selon la revendication 5,
**caractérisé en ce que**
l'application du revêtement de matière plastique sur la bande de matière (2) s'effectue avant ou après l'acheminement et avant la découpe longitudinale en plusieurs bandes de tôle (8, 8', 8").

7. Procédé selon la revendication 5,
**caractérisé en ce que**
l'application du revêtement de matière plastique sur les bandes de tôle (8, 8', 8") s'effectue après la découpe longitudinale et avant le laminage.

8. Procédé selon l'une quelconque des revendications 5 à 7,
**caractérisé en ce que**
le revêtement de matière plastique comprend un agent adhésif, un backlack, un vernis isolant ou un polymère viscoélastique.

9. Procédé selon l'une quelconque des revendications 1 à 8,
**caractérisé en ce que**
la bande de matière (2) acheminée présente une épaisseur (D1) et une largeur (B1),
la largeur (B1) de la bande de matière (2) acheminée étant d'un maximum de 4500 mm, notamment d'un maximum de 2500 mm, notamment d'un maximum de 2000 mm, et
l'épaisseur (D1) de la bande de matière (2) acheminée étant supérieure à 0,04 mm, notamment supérieure à 0,05 mm, et/ou inférieure à 3 mm, notamment inférieure à 2 mm.

10. Procédé selon l'une quelconque des revendications 1 à 9,
**caractérisé en ce que**
la bande de matière (2) acheminée est un paquet de bandes de tôle (12, 12') multicouches.

11. Procédé selon l'une quelconque des revendications 1 à 9,
**caractérisé en ce que**
la découpe longitudinale de la bande de matière (2) acheminée en plusieurs bandes de tôle (8, 8', 8") est réalisée à l'aide d'au moins une unité de sectionnement (7, 7'), qui est placée dans un plan de sectionnement (E1, E2) perpendiculaire à la direction de transport, et
**en ce que** la superposition continue d'au moins un nombre partiel des bandes de tôle (8, 8', 8") est réalisée dans un plan de solidarisation (E3) majoritairement perpendiculaire à la direction de transport,
au moins un écart en pourcentage entre un trajet que parcourent les bandes de tôle (8, 8', 8") individuelles entre le plan de sectionnement (E1, E2), qui présente le plus grand écart par rapport au plan de solidarisation (E3), et le plan de solidarisation (E3) est inférieur à 25 %, notamment inférieur à 15 %, notamment inférieur à 10 %.

12. Dispositif, destiné à fabriquer des paquets de bandes métalliques multicouches, comprenant :
un ensemble d'acheminement (1), destiné à acheminer une bande de matière (2) métallique,
un ensemble de découpe de bandes (6), destiné à découper longitudinalement la bande de matière (2) dans une direction longitudinale de la bande de matière (2) acheminée en plusieurs bandes de tôle (8, 8', 8"), et
un ensemble de guidage (9), qui est conçu pour superposer en continu au moins un nombre partiel des plusieurs bandes de tôle (8, 8', 8") en un paquet de bandes de tôle (12, 12').

13. Dispositif selon la revendication 12,
**caractérisé par**
un ensemble d'enduction (3, 3'), destiné à appliquer un revêtement de matière plastique sur au moins l'une parmi la face supérieure (19, 19') et la face inférieure (20, 20') de la bande de matière (2) ou des bandes de tôle (8, 8', 8").

14. Dispositif selon l'une quelconque des revendications 12 ou 13,
**caractérisé par**
un ensemble de laminage (13), destiné à laminer les paquets de bandes de tôle (12), notamment un ensemble de laminage (13) pourvu d'un apport de chaleur supplémentaire.

15. Dispositif selon l'une quelconque des revendications 12 à 14,
**caractérisé par**
un ensemble de contourage (15), destiné à découper des paquets de tôle (17, 17') dans les paquets de bandes métalliques (12, 12')
ou un ensemble d'enroulement (22), destiné à enrouler les paquets de bandes de tôle (12, 12') en une bobine (23' ) .
